# EUROPEAN PATENT APPLICATION

(11) **EP 1 719 680 A1**
(43) Date of publication of application: **08.11.2006**
(21) Application number: 05708084.8
(22) Date of filing: 11.02.2005
(51) Int. Cl.: B60T 17/22

(54) **ONE-PERSON-OPERATED TRAIN BRAKE TESTING DEVICE**

(30) Priority: 17.02.2004 ES 200400367
(71) Applicant: Hernandez Jover, Jesus, E-37900 Santa Marta De Tormes (ES)
(72) Inventor: Hernandez Jover, Jesus, E-37900 Santa Marta De Tormes (ES)
(74) Representative: Popp, Eugen
(86) International application number: PCT/ES2005/000072
(87) International publication number: WO 2005/077726

(57) **Abstract**

DEVICE FOR TRAIN BRAKE TEST WITH ONLY ONE OPERATOR, consisting of two radio control equipments composed of an emitter and a receiver; the buttons (4) provided on the emitter (1a) of the portable equipment (1) control the receiver (2b) of the stationary equipment (2), connected to the automatic train brake; the emitter (2a) of the stationary equipment (2), connected to the automatic brake pipe of the locomotive, sends the pressure value to the receiver (1b) on a display (3) provided on the portable equipment (1).

The portable equipment (1) must be unlocked to remove it from the housing (5) by means of the key (6) which, when turned, establishes a circuit (7) that disables the locomotive controls and makes it unable to move, a circuit (8) that enables the receiver (2b) to control the brake, and a third circuit (9) that supplies electric power to the stationary equipment (2). The receiver (2b) is programmed to switch over to braking position when the emitter (1a) signal fails.

## Description

### PURPOSE OF THE INVENTION

The purpose of this Patent application is a device for carrying out different brake tests on all trains with only one person or operator.

### BACKGROUND OF THE INVENTION

Train brakes should function correctly because train traffic safety depends, to a large extent, on their effectiveness. This is regulated in different articles of the General Traffic Regulation and also in the Train Traffic Manual through the execution of different braking mechanism tests that are carried out in the way and with the frequency indicated therein.

Correct performance of these tests in all their modalities (complete test, partial test, continuity test and coupling verification) require two operators - a driver or "head operator" located in the driving cab and a "rear operator" who performs the rest of the functions, moving through the train from one end to the other.

The driver should be in the locomotive cab and pay attention to the indications of the rear operator, actuating the braking mechanisms or releasing the train brakes and visually checking that the pressure of the automatic brake pipe pressure gauge drops when the rear operator opens the shut-off valve of the last train car.

On the other hand, the rear operator checks the grip and release of the brake shoes against the tires on each of the train axles; to do so he indicates to the head operator to brake or release the train brake as many times as necessary. He should also open the shut-off valve of the last car to check whether pressure is reaching the car, and finally check the position of the speed and power exchangers and check that all the hand brakes are released.

These operations had been indistinctly performed by members of the driving crew until the moment when "one-man driving" was implemented, i.e. until the trains were driven by a single person or driver. As of this moment, the collaboration of a "switchman" outside the train becomes necessary, to take over the functions of the "rear operator". The drawback then arises that not all stations have switchmen and that if any incidents occur during the journey on open track, they cannot be solved. It becomes necessary to have two operators to execute the brake tests, one of them arriving with the locomotive and another who is usually in the station, but there are stations where a switchman is not on duty 24 hours a day and it is necessary to wait until one starts work, or if there is none on duty someone must be brought from somewhere else to perform the operation.

### DESCRIPTION OF THE INVENTION

In view of the above and after analyzing the operations performed by each of the operators involved in development of the brake tests, it can be safely said that the party who does the most work and has more responsibility is the rear operator, whereas the head operator is a mere collaborator who simply obeys orders given to him by the rear operator.

To remedy the above mentioned drawbacks, the applicant for this Patent has conceived an alternative system supported by technology that allows the rear operator to do the checking and component handling tasks that are done by the head operator without forgetting his own functions, i.e. a device has been conceived for carrying out train brake tests by a single operator.

This device consists of a radio control system basically formed by two complete equipments, where each of these is composed of an emitter and a receiver: one stationary equipment ― emitter and receiver ― installed in the locomotive, and another portable, small-sized unit to be hand carried by the operator performing the test while he moves about the train checking the brakes.

The portable equipment is provided with two brake and release buttons which are operated by the operator performing the test to control a receiver located in the stationary equipment in the locomotive which, with the suitable means, makes the locomotive brake or releases the automatic train brake, depending on which button has been pressed. When neither button is pressed, braking will be kept stable ― without braking or release.

On the other hand, an emitter in the stationary equipment, connected to the automatic brake pipe of the locomotive, constantly sends, as long as it is connected, the pressure value in this pipe to the portable equipment receiver which shows this datum on a display, thus allowing the operator performing the test to see at all times the value of the brake being applied.

To increase safety, the portable equipment is installed in a housing interlocked by means of a key in the locomotive. To remove equipment and put it into operation, it must be unlocked by turning the key. When the key is turned, electrical contacts provided on the lock establish three different types of circuits in the locomotive.

The first circuit disables the locomotive control elements, making it unable to move until the portable equipment is returned to its housing and the key is turned again to its interlocked position (a conventional safety mechanism prevents the key from being turned if the equipment is not in its place), as a precaution against someone accessing the locomotive when the operator is testing the brake.

The second circuit is established to enable controllability of the automatic brake board, or of any other system that may be used by the locomotive to control the train brakes, with the radio control component. In locked position, there is no possibility that any other exterior radio control equipment can actuate our brake. This is a double circuit with two separate branches, to prevent a hypothetical failure of a circuit element from resulting in release of the train brake.

The third circuit established when the locked key is turned to its unlocked position supplies electric power to the stationary radio control equipment in the locomotive which, in its locked position, is disconnected and cannot receive any kind of signal.

To guarantee absolute reliability, the radio signal modulation system of the device is coded, and it is practically impossible for another emitter to seize control of the receiver. Each receiver only obeys its emitter.

On the other hand, if the receiver no longer clearly receives the signal from its emitter for any reason (wear, discharged battery, interference, etc.), the latter begins executing a programmed operation to cause emergency braking, thus preventing any falsification of the brake test.

With this device, a single operator can carry out the operations of both the rear operator and the head operator. With this device, this single operator will be able to perform all the brake testing operations by himself and save time during waits. By using the device, trains can even be dispatched from stations without personnel, and in large marshalling yards and by applying restricted driving, a single switchman with the shunting engine or the head locomotive can pass from the head of one train to the head of another, making it possible for a single operator to test the brakes of several compositions.

### BRIEF DESCRIPTION OF THE DRAWINGS

In order to complement the description provided below and to better understand its features, this descriptive report is accompanied by a set of drawings which shows, on an illustrative but not limitative basis, the most significant details of the invention.
Figure 1. This shows a schematic diagram of the device for brake testing with a single operator in unlocked position or operation.
Figure 2. This shows a schematic diagram of the device for brake testing with a single operator in its interlocked position.

### DESCRIPTION OF A PREFERENTIAL EXECUTION

In view of the above mentioned figures and in accordance with the numbering used, a preferential, though not limitative, execution of the invention can be seen in these figures, which is a device formed by a portable radio control equipment -1-, which is small in size to facilitate handling and is composed of an emitter -1 a- and a receiver -1b-, and a second stationary radio control equipment -2- which is installed in the locomotive and in turn is composed of an emitter -2a-and a receiver -2b-.

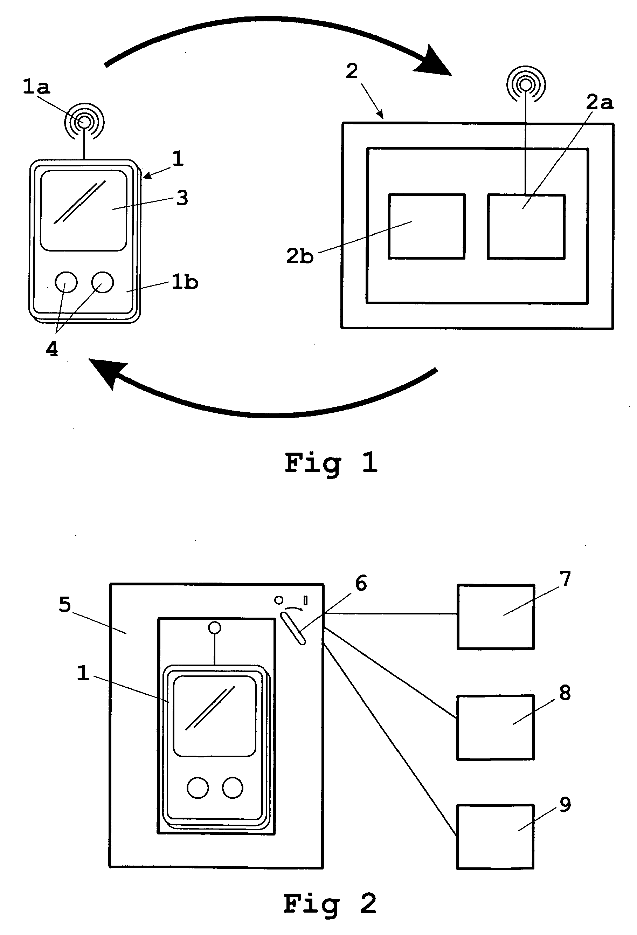

By pressing on the buttons -4- provided on the emitter -1a- of the portable equipment -1-, commands are sent to the receiver -2b- of the stationary equipment -2- which in turn is connected to the automatic train brake (not shown), to make the locomotive brake or release the automatic train brake. On the other hand, the emitter -2a- of the stationary equipment -2-, which is connected to the automatic brake pipe of the locomotive (not shown), constantly sends the value of the pressure inside it to the receiver -1 b- of the portable equipment, which shows this datum on the display -3- provided on it (figure 1).

The portable equipment -1- is installed inside a housing -5- locked by means of a key -6- in the locomotive. To be able to remove and put the portable equipment -1- into operation, it must be unlocked by turning the key -6- (which will not be able to return to its position if the portable equipment -1- is not in its housing -5-); this turn establishes, via electrical circuits, three different types of circuits in the locomotive. One circuit -7- disables the control elements of the locomotive, making it unable to move as a precaution against someone accessing them. The second circuit -8- enables the receiver -2b- of the stationary radio control equipment -2- to control the automatic brake board (or any other method the locomotive may have to control train braking), depending on the orders received from the emitter -1a- of the portable equipment -1-. This is a double circuit with two separate branches, to prevent a hypothetical failure of a circuit element from resulting in release of the train brake. The third circuit -9- supplies electric power to the stationary equipment -2-, which up to that point was disconnected and could not receive any kind of signal (figure 2).

The device receivers guarantee safety by means of a PCM type coding system, which is used to program them so they will send a specific order when their emitter signal is not being clearly received for any reason, such as lack of coverage, discharged battery, interference of another signal, etc.; in this case the receiver -2b- of the stationary equipment -2- switches over to braking position to ensure that only our emitter can make the locomotive release the brake, thus avoiding all kinds of errors or interference.

## Claims

1. DEVICE FOR TRAIN BRAKE TEST WITH ONLY ONE OPERATOR, **characterized by** the fact that it consists of a portable radio control equipment (1), composed of an emitter (1 a) and a receiver (1b), and a second stationary radio control equipment (2) which is installed in the locomotive and in turn is composed of an emitter (2a) and a receiver (2b).

2. DEVICE FOR TRAIN BRAKE TEST WITH ONLY ONE OPERATOR, according to the preceding claim, **characterized by** the fact that pressing the buttons (4) provided on the emitter (1a) of the portable equipment (1) controls the receiver (2b) of the stationary equipment (2), which in turn is connected to the automatic train brake and either brakes or releases it.

3. DEVICE FOR TRAIN BRAKE TEST WITH ONLY ONE OPERATOR, according to the preceding claims, **characterized by** the fact that the emitter (2a) of the stationary equipment (2), connected to the automatic brake pipe of the locomotive, constantly sends its pressure value to the receiver (1 b), which shows it on a display (3) provided on the portable equipment (1).

4. DEVICE FOR TRAIN BRAKE TEST WITH ONLY ONE OPERATOR, according to the preceding claims, **characterized by** the fact that the portable equipment (1) is installed in the locomotive inside a housing (5), because to remove and put the portable equipment (1) into operation, it must be unlocked by turning the key (6) and because the key (6) cannot return to its position if the portable equipment (1) is not inside its housing (5).

5. DEVICE FOR TRAIN BRAKE TEST WITH ONLY ONE OPERATOR, according to the preceding claims, **characterized by** the fact that the turn of the key (6) establishes, via electrical contacts, a circuit (7) that disables the locomotive control elements and makes it unable to move.

6. DEVICE FOR TRAIN BRAKE TEST WITH ONLY ONE OPERATOR, according to the preceding claims, **characterized by** the fact that the turn of the key (6) establishes, via electrical contacts, a second circuit (8) that enables the receiver (2b) of the stationary radio control equipment (2) to control the automatic brake board (or any other element used by the locomotive to control the train brake), because this circuit is double with two separate branches..

7. DEVICE FOR TRAIN BRAKE TEST WITH ONLY ONE OPERATOR, according to the preceding claims, **characterized by** the fact that turn of the key (6) establishes, via electrical contacts, a third circuit (9) that supplies electric power to the stationary equipment (2).

8. DEVICE FOR TRAIN BRAKE TEST WITH ONLY ONE OPERATOR, according to the preceding claim, **characterized by** the fact that the receiver (2b) of the stationary equipment (2) is programmed to switch over to the braking position when the signal of the emitter (1a) of the portable equipment (1) is not clearly received for any reason, such as lack of coverage, discharged battery, interference of another signal, etc., thus avoiding all kinds of errors or interference.
